(19) Europäisches Patentamt / European Patent Office / Office européen des brevets

(11) **EP 2 542 463 B1**

(12) **EUROPEAN PATENT SPECIFICATION**

(45) Date of publication and mention
of the grant of the patent:
**16.11.2016   Bulletin 2016/46**

(21) Application number: **11750989.3**

(22) Date of filing: **24.02.2011**

(51) Int Cl.:
***B62D 47/02*** *(2006.01)*   ***B62D 53/00*** *(2006.01)*
***G07C 5/00*** *(2006.01)*   ***B60D 1/32*** *(2006.01)*
***B60D 5/00*** *(2006.01)*

(86) International application number:
**PCT/SE2011/050210**

(87) International publication number:
**WO 2011/108976 (09.09.2011 Gazette 2011/36)**

(54) **SYSTEM AND METHOD FOR MONITORING OF OIL LEVEL IN A DAMPING UNIT IN A VEHICLE**

SYSTEM UND VERFAHREN ZUR ÜBERWACHUNG DES ÖLSTANDES IN EINER
DÄMPFUNGSEINHEIT EINES FAHRZEUGS

SYSTÈME ET PROCÉDÉ POUR SURVEILLER LE NIVEAU D'HUILE DANS UNE UNITÉ
AMORTISSEUSE DANS UN VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **01.03.2010   SE 1050191**

(43) Date of publication of application:
**09.01.2013   Bulletin 2013/02**

(73) Proprietor: **Scania CV AB
151 87 Södertälje (SE)**

(72) Inventors:
• **ROBERTSSON, Oscar
SE-115 43 Stockholm (SE)**

• **THOLÈN, Johan
SE-146 45 Tullinge (SE)**

(74) Representative: **Scania CV AB
Patents, GP 117kv
151 87 Södertälje (SE)**

(56) References cited:
**EP-A1- 0 245 624      WO-A1-2008/073045
DE-A1- 3 405 871      DE-A1- 3 405 871
DE-U1- 20 317 243      DE-U1- 20 317 243
US-A- 4 583 756**

**Description**

Field of the invention

Present invention relates to a system for monitoring the oil level in one or more damping units which form part of an articulation in an articulated vehicle, and to a relating method, according to the preambles of the respective independent claims.

Background to the invention

There are several advantages in having a long vehicle, e.g. the potential for transporting more persons. For a long vehicle to be drivable in urban traffic, it needs to be able to swing round sharp bends, and one way of solving this problem is to divide the vehicle into several sections respectively connected to one another by an articulation. Such vehicles are called articulated vehicles, e.g. an articulated bus. Other examples of vehicles in which an articulation is applicable are rail vehicles, trains and heavy vehicles such as trucks and front loaders.

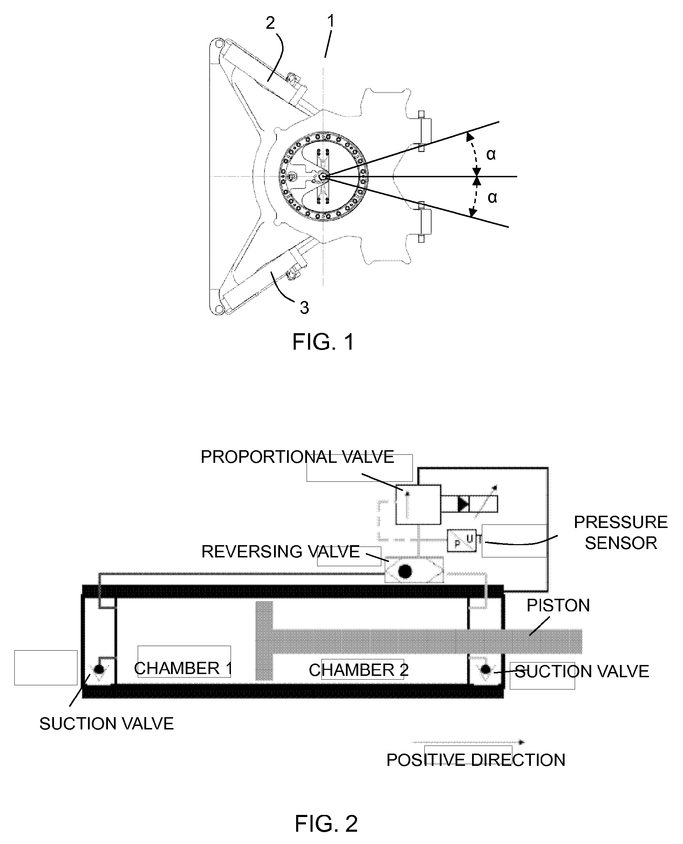

The floor in an articulated bus is usually low at the front of the bus to facilitate boarding and alighting and enhance usability for passengers. The engine may then be fitted in the rear section of the vehicle, and the thrust imparted by the rear section causes the front section to move forward. In the articulation unit there are one or more hydraulic cylinders which are intended to serve as dampers during pivoting of the articulation and which reduce undesirable effects such as horizontal oscillations in the vehicle's rear section when the vehicle is in motion. An example of such an articulation is depicted in Figure 1.

The damping capacity of a cylinder is controlled by a proportional valve which has pressure limiting effects. The valves are controlled by a control unit which decides the rigidity of the articulation on the basis of such parameters as articulation angle size, articulation angle rate, vehicle speed etc.

An example of a control system for an articulation in an articulated vehicle is referred to in specification WO 2008/073045. The articulation control system detects various control parameters such as the pressure in the respective hydraulic cylinders, the vehicle's articulation angle, the rate at which the articulation bends, etc. These values then serve as a basis for determining to what extent the respective hydraulic cylinders need to damp the articulation movement. The driver is provided with a warning if any malfunction occurs in the damping system.

Another example is referred to in US 4583756, which describes a control system for preventing excessive pivoting of articulated vehicles. The driver is warned when pressure values are above or below certain limits.

DE 3405871 the preamble of claim 1. The above systems require correct oil level of the hydraulic cylinders. For optimum functioning of the damping system, however, the respective oil levels in the hydraulic cylinders really do need to be correct. This is particularly important during, for example, vigorous evasive manoeuvres, a situation in which the control of the dampers plays a major part. If the oil level of the cylinders is incorrect, the vehicle will not react as required during, for example, a rapid event, resulting in the possibility of dangerous situations.

The object of the invention is therefore to monitor the oil level in the hydraulic cylinders in order to be able to take action if incorrect oil levels are detected, and in particular to ensure proper control of the damping system.

Summary of the invention

The object described above is achieved by a system for monitoring the oil level in a damping unit which forms part of an articulation of an articulated vehicle, which articulation connects a forward section of the vehicle to a rear section. The system comprises an angle sensor adapted to detecting the vehicle's articulation angle $\alpha$ at the time and generating an articulation angle signal $\alpha_{sig}$ which depends on the angle $\alpha$ detected, a first pressure sensor adapted to detecting a pressure P at the time in a damping unit and generating a corresponding pressure signal which depends on the pressure P detected, and a calculation unit provided with a model of an ideal damping unit and adapted to calculating what pressure P' an ideal damping unit is at in a given situation, by using said model for which the articulation angle signal $\alpha_{sig}$ is used as input signal, and to comparing the pressure P at the time with the calculated pressure P' and determining a pressure difference $\Delta P = P' - P$, and to generating an indicating signal if $\Delta P > P_{th1}$, where $P_{th1}$ is a predetermined and settable threshold value.

The object is achieved according to another aspect by a method for monitoring the oil level in a damping unit which forms part of an articulation of an articulated vehicle, which articulation connects a forward section of the vehicle to a rear section. The method comprises: detecting the vehicle's articulation angle $\alpha$ at the time and generating an articulation angle signal $\alpha_{sig}$ which depends on the angle $\alpha$ detected; sending the angle signal $\alpha_{sig}$ to a calculation unit provided with a model of an ideal damping unit; calculating what pressure P' an ideal damping unit is at in a given situation, by using said model for which the articulation angle signal $\alpha_{sig}$ is used as input signal; detecting the pressure P at the time in the damping unit and generating a pressure signal which depends on the pressure P; sending the respective pressure signal to said calculation unit; and comparing the pressure P with the calculated pressure P' and determining a pressure difference $\Delta P = P' - P$, and if $\Delta P > P_{th1}$, where $P_{th1}$ is a predetermined and settable threshold value, an indicating signal is generated.

Using a model of an ideal damping unit makes it possible to compare the pressure in a damping unit in the vehicle with what it should have been in the situation at the time if the oil level of the damping unit had been correct. Differences between the nominal pressure and the actual pressure in the damping unit are thus detected. This makes it possible to detect a pressure deviation in the damping unit which shows that the oil level in the hydraulic cylinders is incorrect. The system can then take appropriate measures, e.g. warn the driver or put the vehicle into a safe state which may mean its progress being limited by, for example, limitation of its speed or engine torque.

The invention makes it possible to detect the oil level in real time during varying and unpredictable movements.

Incorrect control of one or more damping units due to an incorrect calculation basis can also be avoided.

Preferred embodiments are described in the dependent claims and the detailed description.

Brief description of the attached drawings

The invention is described below with reference to the attached drawings, in which:

Figure 1 depicts an example of an articulation in an articulated vehicle.
Figure 2 depicts schematically a hydraulic system of a damping unit.
Figure 3 depicts schematically the system according to an embodiment of the invention.
Figure 4 is a flowchart for an embodiment of the invention.

Detailed description of preferred embodiments of the invention

Figure 1 depicts an example of an articulation usable in an articulated bus. In the diagram, the triangle-like base is directed rearwards in the bus. In the articulation unit 1 there are two damping units 2, 3 in the form of hydraulic cylinders intended to serve as dampers during pivoting of the articulation. A damping unit 2, 3 constitutes a self-contained hydraulic system and the damping units are only connected together purely mechanically. When the articulated vehicle turns, the resulting deflection is detected in the form of an articulation angle designated $\alpha$ in Figure 1. This articulation is only to be regarded as an example and the present invention is also usable in conjunction with articulations with only one damping unit or more than two damping units.

Figure 2 is a general diagram of the hydraulic system of the damping unit 2, 3. The damping unit 2, 3 is divided into two chambers, chamber 1 and chamber 2, by a piston, and the diagram also depicts a positive piston movement. In each chamber there is an outlet to a reversing valve and an inlet from a liquid reservoir via a suction valve. When there is a pressure difference between chamber and reservoir such that the chamber is at a lower pressure than the reservoir, the suction valve opens and allows liquid to be drawn into the chamber in order to prevent major negative pressures and to replenish with oil. There is a pressure sensor between the reversing valve and proportional valve. The proportional valve is an example of a pressure limiting valve which can be controlled. The reversing valve is a flow valve which in the hydraulic system allows liquid to pass from the chamber which has the higher pressure.

What largely characterises a hydraulic system is the liquid in the system, which may in principle be any desired liquid, but what is used in practice is some type of mineral oil or synthetic liquid based on oil.

Seals are used to prevent leakage in the damping unit 2, 3. Those used to prevent internal leakage between the two chambers are of dynamic type whose deformation is not altered by movement. External leakage whereby liquid disappears from the system is most commonly caused by incorrect installation, deficiencies of construction or maintenance and wear of seals and valves.

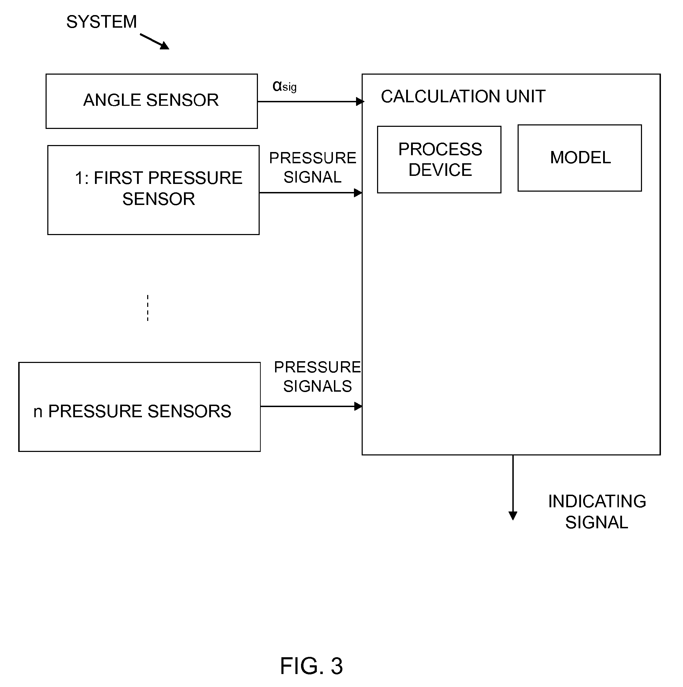

Figure 3 depicts a system according to the invention for monitoring the oil level in a damping unit 2, 3 such as described above. The system comprises an angle sensor adapted to detecting the vehicle's articulation angle $\alpha$ at the time and generating an articulation angle signal $\alpha_{sig}$ which depends on the angle $\alpha$ detected, a first pressure sensor adapted to detecting a pressure P at the time in a damping unit 2, 3 and generating a corresponding pressure signal which depends on the pressure P detected. The system further comprises a calculation unit provided with a model of an ideal damping unit and adapted to calculating what pressure P' an ideal damping unit is at in a given situation by using said model, for which the articulation angle signal $\alpha_{sig}$ is used as input signal, and to comparing the pressure P at the time with the calculated pressure P' and determining a pressure difference $\Delta P = P' - P$, and to generating an indicating signal if $\Delta P > P_{th1}$, where $P_{th1}$ is a predetermined and settable threshold value.

An incorrect pressure indicating an incorrect liquid level in a damping unit can thus be detected.

A situation may involve inter alia articulation angle, articulation angle rate, vehicle speed, initial angle and/or final angle.

The calculation unit may be part of another control unit in the vehicle, or be a self-contained control unit, and is provided with necessary hardware and software such as processor, memory and programme code for carrying out operations herein described. The calculation unit communicates preferably via CAN (Controller Area Network), which is a serial bus system specifically developed for use in vehicles. The CAN data bus provides the possibility of digital data exchange between sensors, regulating components, actuators, control devices etc. and ensures that several control devices can have access to the signals from a given sensor in order to use them for control of components connected to them. According to an embodiment, the angle sensor is directly connected to the calculation unit, but may instead be distributed to other systems in the vehicle and be communicated with via, for example, CAN.

The system may preferably continuously receive signals from an angle sensor and a pressure sensor or sensors. According to a preferred embodiment, the calculation unit is adapted to summating a number n of $\Delta$Ps determined during a time period $t_1$ and to forming $\Sigma \Delta P$, and if $\Sigma \Delta P > Pth2$, where Pth2 is a predetermined and settable threshold level, the calculation unit is adapted to generating an indicating signal. Taking into account several deviations during a time period makes it possible to diagnose more reliably an incorrect oil level in a damping unit. Other ways of calculating pressure deviations may also be conceivable, e.g. mean value formation over several time periods, also called test sequences. The calculation unit may also be adapted to calculating how many times an indicating signal is generated during a time period $t_2$, and if it is found that many time periods $t_1$ generate indicating signals, the system is adapted to delivering an alarm which provides information about the malfunction and which damping unit 2, 3 has a deviating pressure. According to an embodiment, the time period $t_1$ is a period when the vehicle is turning and the piston is moving in a positive direction (see Figure 2). Differences between the nominal pressure and the actual pressure in the damping unit 2, 3 may then be detected during the build-up phase for an expansion movement, which is preferred in that the pressure in the damping unit 2, 3 then builds up more slowly because of the smaller piston area. Monitoring the magnitude and rate of the articulation angle makes it possible for the system to decide when a turn begins and ends and in which direction the vehicle is turning.

According to an embodiment, the calculation unit is adapted to assessing the reliability of data gathered and calculated during a time period $t_1$ on the basis of criteria such as articulation angle range and/or average articulation angle rate and/or number of $\Delta$Ps detected which exceed $P_{th2}$, and to generating an approval signal if the criteria are fulfilled. There is thus assurance that data gathered are correct. For example, the calculation unit may assess the reliability by comparing the articulation angle at the beginning of the time period $t_1$ with the articulation angle at the end of the time period. This makes it possible to know how much movement is executed during the time period. A criterion for that movement may be for it to be greater than, for example, 15°. Other criteria may for example be the nature of the movement, i.e. at what angle it begins and ends. If the criteria are not fulfilled, data gathered during the time period are therefore not approved and are rejected.

The information that the pressure in a damping unit 2, 3 is incorrect may be used in various different ways. The indicating signal may be conveyed to the driver via an indicating unit adapted to conveying it, e.g. by light signals from a flashing warning lamp or by acoustic signals in short sequences. The indicating signal may also be logged in a memory in a control unit of the vehicle or be sent to a central unit for further analysis and response. According to an embodiment, the signal in such cases is sent via wireless communication. Data arising during the time period in which the malfunction is detected may then also be saved and sent to the same central unit for further analysis and diagnosis.

According to an embodiment, the system is adapted to sending a control signal to a control unit in the vehicle to limit the vehicle, e.g. by limiting its permissible speed and/or engine torque if an indicating signal is generated to the effect that the oil level in the damping unit at the time is too low. Thus the vehicle's progress is limited to avoid exposing it and its passengers to unnecessary risks. Another way of expressing this is that the vehicle is put into "limp-home" mode. According to another embodiment, limitation of the vehicle's usability has to be preceded by an approval signal generated during the respective time period to the effect that data gathered are approved.

According to an embodiment, the model of an ideal damping unit is

$$P' = K \cdot \frac{x_n - x_{n-1}}{l - x_{n-1}} \tag{1}$$

where K is a constant, $x_n$ the position of the damping unit's piston at time n, $x_{n-1}$ the piston position at time n-1 and $l$ the maximum deployed length of the damping unit 2, 3. The model supposes that the movement of the piston is positive, i.e. in the direction of the arrow in Figure 2.

As previously indicated, the articulation angle signal $\alpha_{sig}$ at the time is the input signal to the model and the piston position can be derived from the given articulation angle $\alpha$ by using the trigonometric relationship between the articulation angle $\alpha$ and the piston position. An example will now be described of how to derive the piston position. Other articulations may be configured differently, in which case some other relationship may apply.

When an articulation angle is to be converted to a piston position, there are three relevant measurements. With reference to Figure 1, measurement b is the transverse component of the distance between the fastening point of the damping unit 2, 3 in the vehicle's rear section and the centre of the articulation. In the same way, *c* is the longitudinal component of that distance. The distance between the centre and the damper's other fastening point is designated r as in radius. The length L of the damping unit 2, 3 at a certain articulation angle $\alpha$ is then arrived at by the equation

$$L(\alpha) = \sqrt{(c - r \cdot \sin \alpha)^2 + (b - r \cdot \cos \alpha)^2} \qquad (2)$$

As the length of the damping unit 2, 3 is not as useful as a position, it is converted by means of a reference value, the reference value chosen here being the length $L_r$ of the fully retracted damping unit 2, 3. This leads to the equation

$$x(\alpha) = L(\alpha) - L_r \qquad (3)$$

The pressure in formula (1) can therefore be calculated by using the value of the articulation angle. The above equations are valid for the right damping unit 3 in Figure 1 but are calculated in a similar way for the left damping unit 2.

A linear approximation of the formulae set out above for calculating the position of the piston at the articulation angle $\alpha$ at the time may be such as

$$x(\alpha) = k \cdot \alpha + m \qquad (4)$$

where k is the absolute amount of the slope in a piston position/articulation angle diagram and the constant m is chosen such that the error at 0° is zero, since a turn often begins close to the angle 0° (supposing that 0° means straight ahead in the vehicle's direction of movement).

The system may also be adapted to monitoring the oil level in several damping units. In that case the system is provided with several pressure sensors adapted to detecting pressures P at the time in the damping units, and the calculation unit is adapted to calculating whether any of those pressures are too low, in which case it generates a signal indicating which of the damping units 2, 3 is at too low a pressure. Figure 3 illustrates the possibility of the system comprising n pressure sensors adapted to measuring the pressure in n damping units. Measuring the pressure in several damping units 2, 3 in the articulation 1 makes it possible for the system to send control signals to one or more control units which regulate the pressure in the damping units when the pressure P at the time in a damping unit is too low, so that the control unit or units can compensate for that low pressure by altering the pressure in another damping unit 2, 3. For example, a standard damping may be applied to the malfunctioning damping unit 2, 3, or control of the malfunctioning damping unit 2, 3 may be halted and double damping be applied to the other damping unit 2, 3 which is not malfunctioning.

The model (1) described supposes a positive piston deflection in the exemplified articulation, see Figure 2. During a left turn the positive movement of the piston will be in the articulation's right damping unit denoted by ref. 3 in Figure 1. Thus the right damping unit 3 is preferably assessed when turning left, and on the same reasoning the articulation's left damping unit denoted by ref. 2 in Figure 1 is preferably assessed when turning right. As previously mentioned, the system is adapted to deciding when a turn begins and ends, and in which direction the vehicle is turning, by monitoring the magnitude and rate of the articulation angle. In the case of other articulations, other suppositions may apply, and what is here described with reference to the articulation in Figure 1 is to be taken as merely an example.

The threshold values $P_{th1}$ and $P_{th2}$ vary depending on type of articulation and cylinder and are therefore set after the hardware used.

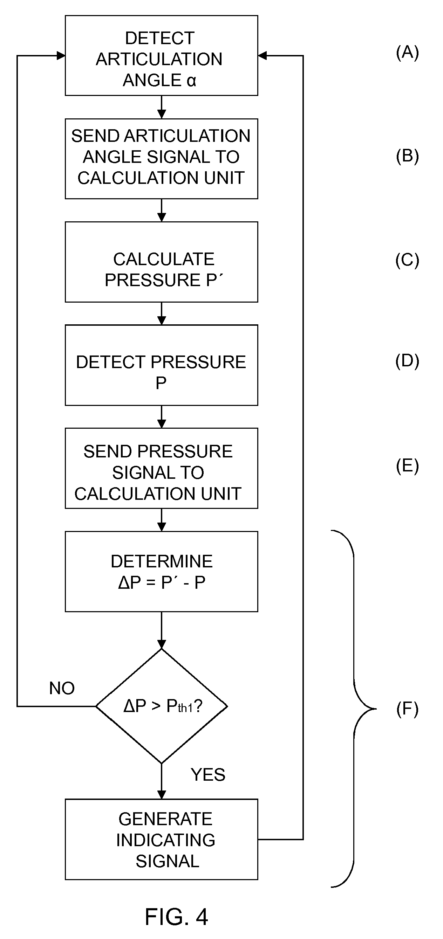

The invention relates also to a method for monitoring the oil level in a damping unit which forms part of an articulation of an articulated vehicle, which articulation connects a forward section of the vehicle to a rear section. A flowchart for the method appears in Fig. 4. The method comprises: A) detecting the vehicle's articulation angle $\alpha$ at the time and generating an articulation angle signal $\alpha_{sig}$ which depends on the angle $\alpha$ detected; B) sending the angle signal $\alpha_{sig}$ to a calculation unit provided with a model of an ideal damping unit; C) calculating what pressure P' an ideal damping unit is at in a given situation, by using said model for which the angle signal $\alpha_{sig}$ is used as input signal; D) detecting a pressure P at the time in the damping unit and generating a pressure signal which depends on that pressure P; E) sending the respective pressure signal to said calculation unit; and F) comparing the pressure P at the time with the calculated pressure P' and determining a pressure difference $\Delta P = P' - P$, and if $\Delta P > P_{th1}$, where $P_{th1}$ is a predetermined and settable threshold value, an indicating signal is generated. This makes it possible to decide whether the pressure detected is an incorrect pressure and hence to detect an incorrect oil level.

The method preferably comprises summating a number n of $\Delta P$s determined during a time period $t_1$ and forming $\Sigma \Delta P$, and if $\Sigma \Delta P > P_{th2}$, where Pth2 is a predetermined and settable threshold level, an indicating signal is generated. Since several measured values are here used to investigate whether the pressure in the damping unit 2, 3 is incorrect, the diagnosis will be more reliable.

According to an embodiment, the method comprises assessing the reliability of data gathered and calculated during the time period $t_1$ on the basis of criteria such as articulation angle range and/or average articulation angle rate and/or number of $\Delta$Ps detected which exceed $P_{th2}$, and generating an approval signal if the criteria are fulfilled. Approval signals can then be used to pick out which time periods have approved data. According to an embodiment, the method comprises limiting the vehicle by, for example, limiting its permissible speed and/or engine torque if an indicating signal is generated to the effect that the oil level in the damping unit at the time is too low and an approval signal is generated for the respective time period. For the indicating signal to be valid here, data underlying the calculations must therefore have been approved. Alternatively, a control signal is sent to a control unit in the vehicle to limit its permissible speed and/or engine torque when indicating signals only have been generated. The calculation unit then supposes that data detected are correct.

According to another embodiment, the method comprises monitoring the oil level in several damping units, which involves detecting pressures P at the time in said damping units and calculating whether any of the pressures in the damping units at the time are too low, indicating too low an oil level, in which case it generates a signal indicating which of the damping units is at too low an oil level.

According to a further embodiment, the method comprises sending control signals to one or more control units which regulate the pressure in the damping units when the pressure P at the time in a damping unit is too low, so that said control unit or units can compensate for this low pressure by altering the pressure in another damping unit.

The invention relates also to a computer programme product which comprises computer programme instructions to enable a computer system in a vehicle to perform the steps of the method described when the computer programme instructions are run on said computer system. The invention comprises also a computer programme product in which the computer programme instructions are stored on a medium which is readable by a computer system.

The present invention is not limited to the embodiments described above. Various alternatives, modifications and equivalents may be used. The aforesaid embodiments therefore do not limit the scope of the invention which is defined by the claims.

**Claims**

1. A system for monitoring the oil level in a damping unit which forms part of an articulation (1) of an articulated vehicle, which articulation connects a forward section of the vehicle to a rear section, which system comprises:

   - an angle sensor adapted to detecting the vehicle's articulation angle $\alpha$ at the time and generating an articulation angle signal $\alpha_{sig}$ which depends on the angle $\alpha$ detected;
   - a first pressure sensor adapted to detecting a pressure P at the time in a damping unit (2, 3) and generating a corresponding pressure signal which depends on the pressure P detected;
   **characterised in that** the system comprises:

   - a calculation unit provided with a model of an ideal damping unit and adapted to calculating what pressure P' an ideal damping unit is at in a given situation, by using said model for which the angle signal $\alpha_{sig}$ is used as input signal; and to comparing the pressure P at the time with the calculated pressure P' and determining a pressure difference $\Delta P = P' - P$, and to generating an indicating signal if $\Delta P > P_{th1}$, where $P_{th1}$ is a predetermined and settable threshold value.

2. A system according to claim 1, in which the calculation unit is adapted to summating a number n of $\Delta$Ps determined during a time period $t_1$ and to forming $\Sigma \Delta P$, and if $\Sigma \Delta P > P_{th2}$, where $P_{th2}$ is a predetermined and settable threshold level, the calculation unit is adapted to generating an indicating signal.

3. A system according to claim 2, in which the calculation unit is adapted to assessing the reliability of data gathered and calculated during the time period $t_1$ on the basis of criteria such as articulation angle range and/or average articulated angle rate and/or number of $\Delta$Ps detected which exceed $P_{th2}$, and to generating an approval signal if the criteria are fulfilled.

4. A system according to claim 3 which is adapted to sending a control signal to a control unit in the vehicle to limit the vehicle, e.g. by limiting its permissible speed and/or engine torque if an indicating signal is generated to the effect that the oil level in the damping unit Z r (2, 3) at the time is too low and an approval signal is generated.

5. A system according to claim 1 or 2 which is adapted to sending a control signal to a control unit in the vehicle to limit the vehicle, e.g. by limiting its permissible speed and/or engine torque if an indicating signal is generated to the effect that the oil level in the damping unit at the time is too low.

**6.** A system according to any one of the foregoing claims, which system comprises an indicating unit adapted to conveying said indicating signals to the driver in the vehicle.

**7.** A system according to any one of the foregoing claims, in which the model of an ideal damping unit is

$$P' = K \cdot \frac{x_n - x_{n-1}}{l - x_{n-1}},$$

where K is a constant, $x_n$ the deflection of the damping unit's piston at time n, $x_{n-1}$ the piston deflection at time n-1 and $l$ the length of the damping unit.

**8.** A system according to any one of the foregoing claims, which is adapted to monitoring the oil level in several damping units, Z r (2, 3) such that the system is provided with several pressure sensors adapted to detecting pressures P at the time in said damping units, (2, 3) and the calculation unit is adapted to calculating whether any of those pressures are too low, in which case it generates a signal indicating which of the damping units is at too low a pressure.

**9.** A system according to claim 8, which is adapted to sending control signals to one or more control units which regulate the pressure in the damping units (2, 3) when a pressure P at the time in a damping unit (2, 3) is too low, so that said control unit or units can compensate for that low pressure by altering the pressure in another damping unit.

**10.** A method for monitoring the oil level in a damping unit which forms part of an articulation of an articulated vehicle, which articulation connects a forward section of the vehicle to a rear section, **characterised in that** the method comprises:

- detecting the vehicle's articulation angle $\alpha$ at the time and generating an articulation angle signal $\alpha_{sig}$ which depends on the angle $\alpha$ detected;
- sending the angle signal $\alpha_{sig}$ to a calculation unit provided with a model of an ideal damping unit;
- calculating what pressure P' an ideal damping unit is at in a given situation, by using said model for which the angle signal $\alpha_{sig}$ is used as input signal;
- detecting a pressure P at the time in the damping unit Z r (2, 3) and generating a pressure signal which depends on that pressure P;
- sending the respective pressure signal to said calculation unit;
- comparing the pressure P at the time with the calculated pressure P' and determining a pressure difference $\Delta P = P' - P$, and if $\Delta P > P_{th1}$, where $P_{th1}$ is a predetermined and settable threshold value, an indicating signal is generated.

**11.** A method according to claim 10 which comprises summating a number n of $\Delta$Ps determined during a time period $t_1$ and forming $\Sigma \Delta P$, and if $\Sigma \Delta P > P_{th2}$, where $P_{th2}$ is a predetermined and settable threshold level, an indicating signal is generated.

**12.** A method according to claim 11 which comprises assessing the reliability of data gathered and calculated during the time period $t_1$, on the basis of criteria such as articulation angle range and/or average articulated angle rate and/or number of $\Delta$Ps detected which exceed $P_{th2}$, and generating an approval signal if the criteria are fulfilled.

**13.** A method according to claim 10 or 11 which comprises limiting the vehicle's permissible speed and/or engine torque if an indicating signal is generated to the effect that the oil level in the damping unit at the time is too low and an approval signal is generated.

**14.** A method according to claim 10 or 11 which comprises sending a control signal to a control unit in the vehicle to limit the vehicle, e.g. by limiting its permissible speed and/or engine torque if an indicating signal is generated to the effect that the oil level in the damping unit at the time is too low.

**15.** A method according to any one of claims 10-14, in which the model of an ideal damping unit is

$$P' = K \cdot \frac{x_n - x_{n-1}}{l - x_{n-1}},$$

where K is a constant, $x_n$ the deflection of the damping unit's piston at time n, $x_{n-1}$ the piston deflection at time n-1 and / the length of the damping unit (2, 3).

16. A method according to any one of claims 10 to 15 which comprises monitoring the oil level in several damping units, (2, 3) such that the method comprises detecting pressures P at the time in said damping units (2, 3) and calculating whether any of those pressures are too low, which indicates too low an oil level, and generating a signal indicating which of the damping units (2, 3) is at too low a pressure.

17. A method according to claim 16, which comprises sending control signals to one or more control units which regulate the pressure in the damping units (2, 3) when a pressure P at the time in a damping unit (2, 3) is too low, so that said control unit or units can compensate for that low pressure by altering the pressure in another damping unit (2, 3).

18. A method according to any one of claims 10 to 17 which comprises conveying said indicating signals to the driver of the vehicle.

19. A computer programme product which comprises computer programme instructions to enable a computer system in a vehicle to perform the steps according to the method any one of the claims 10 to 18 when the computer programme instructions are run on said computer system.

20. A computer programme product according to claim 19 in which the computer programme instructions are stored on a medium which is readable by a computer system.

**Patentansprüche**

1. System zum Überwachen des Ölstandes in einer Dämpfungseinheit, das einen Teil eines Gelenks (1) eines Gelenkfahrzeugs bildet, wobei das Gelenk einen vorderen Bereich des Fahrzeugs mit einem hinteren Bereich verbindet, wobei das System umfasst:

   - einen Winkelsensor, der dazu ausgebildet ist, den momentanen Gelenkwinkel $\alpha$ des Fahrzeugs zu bestimmen und ein Gelenkwinkelsignal $\alpha_{sig}$ zu erzeugen, der von dem erfassten Winkel $\alpha$ abhängt;
   - einen ersten Drucksensor, der dazu ausgebildet ist, einen Ist-Druck P in einer Dämpfungseinheit (2, 3) zu erfassen und ein korrespondierendes Drucksignal zu erzeugen, das von dem erfassten Druck P abhängt;
   **dadurch gekennzeichnet, dass** das System umfasst:

      - eine Berechnungseinheit, die mit einem Modell einer idealen Dämpfungseinheit ausgestattet und dazu ausgebildet ist, um zu berechnen, welcher Druck P' einer idealen Dämpfungseinheit in der gegebenen Situation zugegen ist, durch Benutzung des Modells, wofür das Winkelsignal $\alpha_{sig}$ als Eingangssignal genutzt wird; und um den Ist-Druck P mit dem berechneten Druck P' zu vergleichen und eine Druckdifferenz $\Delta P = P' - P$ zu bestimmen, und ein Hinweissignal zu erzeugen, falls $\Delta P > P_{th1}$ ist, wobei $P_{th1}$ ein vorbestimmter und einstellbarer Grenzwert ist.

2. System nach Anspruch 1, in dem die Berechnungseinheit dazu ausgebildet ist, eine Anzahl n von $\Delta$Ps zu summieren, die während einer Zeitperiode $t_1$ bestimmt werden, und um die $\Sigma \Delta P$ zu bilden, und falls $\Sigma \Delta P > P_{th2}$ ist, wobei $P_{th2}$ ein vorbestimmter und einstellbarer Grenzwert ist, die Berechnungseinheit dazu ausgebildet ist, ein Hinweissignal zu erzeugen.

3. System nach Anspruch 2, in dem die Berechnungseinheit dazu ausgebildet ist, die Zuverlässigkeit der Daten, die während der Zeitperiode $t_1$ auf der Grundlage von Kriterien, wie beispielsweise Gelenkwinkelbereich und/oder durchschnittliches Gelenkwinkelmaß und/oder Anzahl von erfassten $\Delta$Ps, die $P_{th2}$ überschreiten, gesammelt und berechnet werden, zu bewerten, und ein Bewilligungssignal zu erzeugen, wenn die Kriterien erfüllt sind.

4. System nach Anspruch 3, das dazu ausgebildet ist, ein Steuersignal an eine Steuereinheit in dem Fahrzeug zu senden, um das Fahrzeug beispielsweise durch Begrenzen seiner zulässigen Geschwindigkeit und/oder seines Motordrehmoments zu beschränken, wenn ein Hinweissignal erzeugt wird, wonach der momentane Ölstand in der Dämpfungseinheit (2, 3) zu gering ist und ein Bewilligungssignal erzeugt wird.

5. System nach einem der Ansprüche 1 oder 2, das dazu ausgebildet ist, ein Steuersignal an eine Steuereinheit in dem Fahrzeug zu senden, um das Fahrzeug beispielsweise durch Begrenzen seiner zulässigen Geschwindigkeit und/oder seines Motord-Motordrehmoments zu limitieren, wenn ein Hinweissignal erzeugt wird, wonach der momentane Ölstand in der Dämpfungseinheit zu gering ist.

6. System nach einem der vorherigen Ansprüche, wobei das System eine Meldeeinheit umfasst, die dazu ausgebildet ist, die Hinweissignale an den Fahrer in dem Fahrzeug zu übermitteln.

7. System nach einem der vorherigen Ansprüche, in dem das Modell einer idealen Dämpfungseinheit

$$P' = K \cdot \frac{x_n - x_{n-1}}{l - x_{n-1}}$$

entspricht, wobei K einer Konstante, $x_n$ dem momentanen Ausschlag des Kolbens der Dämpfungseinheit, $x_{n-1}$ dem Kolbenausschlag zum Zeitpunkt n-1 und I der Länge der Dämpfungseinheit entspricht.

8. System nach einem der vorherigen Ansprüche, das dazu ausgebildet ist, den Ölstand in mehreren Dämpfungseinheiten (2, 3) zu überwachen, so dass das System mit mehreren Drucksensoren ausgestattet ist, die dazu ausgebildet sind, Ist-Drücke P in den Dämpfungseinheiten (2, 3) zu bestimmen, und wobei die Berechnungseinheit, dazu ausgebildet ist, zu berechnen, ob einer dieser Drücke zu gering ist, wobei es in dem Fall ein Signal erzeugt, das meldet, welche der Dämpfungseinheiten einen zu geringen Druck aufweisen.

9. System nach Anspruch 8, das dazu ausgebildet ist, Steuersignale an eine oder mehrere Steuereinheiten zu senden, die den Druck in den Dämpfungseinheiten (2, 3) regeln, wenn ein Ist-Druck P in einer Dämpfungseinheit (2, 3) zu gering ist, so dass die Steuereinheit oder -einheiten den geringen Druck durch Ändern des Drucks in einer anderen Dämpfungseinheit kompensieren können.

10. Verfahren zum Überwachen des Ölstandes in einer Dämpfungseinheit, die einen Teil eines Gelenks eines Gelenkfahrzeugs bildet, wobei das Gelenk einen vorderen Bereich des Fahrzeugs mit einem hinteren Bereich verbindet, **dadurch gekennzeichnet, dass** das Verfahren umfasst:

   - Bestimmen des momentanen Gelenkwinkels $\alpha$ und Erzeugen eines Gelenkwinkelsignals $\alpha_{sig}$, das von dem bestimmten Winkel $\alpha$ abhängt;
   - Senden des Gelenkwinkels $\alpha_{sig}$ an eine Berechnungseinheit, die mit einem Modell einer idealen Dämpfungseinheit ausgestattet ist;
   - Berechnen, welcher Druck P' in einer gegebenen Situation einer idealen Dämpfungseinheit entspricht;
   - Bestimmen eines Momentandrucks P in der Dämpfungseinheit (2, 3) und Erzeugen eines Drucksignals, das von dem Druck abhängt;
   - Senden des jeweiligen Drucksignals an die Berechnungseinheit;
   - Vergleichen des Momentandrucks P mit dem berechneten Druck P' und Bestimmen einer Druckdifferenz $\Delta P$ = P' - P, und falls $\Delta P > P_{th1}$ ist, wobei $P_{th1}$ ein vorbestimmter und einstellbarer Grenzwert ist, ein Hinweissignal zu erzeugen.

11. Verfahren nach Anspruch 10, wobei das Verfahren das Summieren einer Anzahl n von $\Delta$Ps, die während einer Zeitperiode $t_1$ bestimmt werden, und das Bilden $\Sigma \Delta P$ umfasst, und falls $\Sigma \Delta P > P_{th2}$ ist, wobei $P_{th2}$ ein vorbestimmter und einstellbarer Grenzwert ist, ein Hinweissignal erzeugt.

12. Verfahren nach Anspruch 11, wobei das Verfahren das Bewerten der Zuverlässigkeit von Daten, die während der Zeitperiode t1 auf der Grundlage von Kriterien, wie beispielsweise Gelenkwinkelbereich und/oder durchschnittliches Gelenkwinkelmaß und/oder Anzahl der erfassten $\Delta$Ps, die $P_{th2}$ überschreiten, gesammelt und berechnet werden, und das Erzeugen eines Bewilligungssignals umfasst, wenn die Kriterien erfüllt sind.

13. Verfahren nach Anspruch 10 oder 11, wobei das Verfahren das Limitieren der zulässigen Geschwindigkeit des Fahrzeugs und/oder des Motordrehmoments umfasst, wenn ein Hinweissignal erzeugt wird, wonach der momentane Ölstand in der Dämpfungseinheit (2, 3) zu gering ist und ein Bewilligungssignal erzeugt wird.

**14.** Verfahren nach Anspruch 10 oder 11, wobei das Verfahren das Senden eines Steuersignals an eine Steuereinheit in dem Fahrzeug umfasst, um das Fahrzeug beispielsweise durch Begrenzen seiner zulässigen Geschwindigkeit und/oder seines Motordrehmoments zu beschränken, wenn ein Hinweissignal erzeugt wird, wonach der momentane Ölstand in der Dämpfungseinheit zu gering ist.

**15.** Verfahren nach einem der Ansprüche 10-14, in dem das Modell einer idealen Dämpfungseinheit

$$P' = K \cdot \frac{x_n - x_{n-1}}{l - x_{n-1}}$$

entspricht, wobei K einer Konstante, $x_n$ dem momentanen Ausschlag des Kolbens der Dämpfungseinheit, $x_{n-1}$ dem Kolbenausschlag zum Zeitpunkt n-1 und I der Länge der Dämpfungseinheit entspricht.

**16.** Verfahren nach einem der Ansprüche 10-15, wobei das Verfahren das Überwachen des Ölstandes in verschiedenen Dämpfungseinheiten (2, 3) umfasst, so dass das Verfahren das Bestimmen der Momentandrücke P in den Dämpfungseinheiten (2, 3) und das Berechnen, ob einer dieser Drücke zu gering ist, was auf einen zu geringen Ölstand hinweist, und das Erzeugen eines Hinweissignals umfasst, welche der Dämpfungseinheiten einen zu geringen Druck aufweisen.

**17.** Verfahrensanspruchs 16, wobei das Verfahren das Senden eines Steuersignals an eine oder mehrere Steuereinheiten umfasst, die den Druck in den Dämpfungseinheiten (2, 3) regeln, wenn ein Momentandruck P in einer Dämpfungseinheit (2, 3) zu gering ist, so dass die Steuereinheit oder -einheiten den geringen Druck durch Ändern des Drucks in einer anderen Dämpfungseinheit kompensieren können.

**18.** Verfahren nach einem der Ansprüche 10-17, wobei das Verfahren das Übermitteln der Hinweissignale an den Fahrer in dem Fahrzeug umfasst.

**19.** Computerprogrammprodukt, wobei das Computerprogramm Anweisungen umfasst, einem Computersystem zu ermöglichen, in einem Fahrzeug die Verfahrensschritte nach einem der Ansprüche 10-18 auszuführen, wenn die Computerprogrammanweisungen auf dem Computersystem ausgeführt werden.

**20.** Computerprogramm Produkt nach Anspruch 19, in dem die Computerprogrammanweisungen auf einem für ein Computersystem lesbaren Medium gespeichert sind.

**Revendications**

**1.** Système pour surveiller le niveau d'huile dans une unité d'amortissement qui fait partie d'une articulation (1) d'un véhicule articulé, cette articulation reliant une section avant du véhicule à une section arrière, ce système comprenant :

    - un capteur d'angle adapté de façon à détecter l'angle d'articulation $\alpha$ du véhicule à l'instant donné et à générer un signal d'angle d'articulation $\alpha_{sig}$ qui dépend de l'angle $\alpha$ détecté ;
    - un premier capteur de pression adapté de façon à détecter une pression P à l'instant donné dans une unité d'amortissement (2, 3) et à générer un signal de pression correspondant qui dépend de la pression P détectée ; **caractérisé en ce que** le système comprend :
    - une unité de calcul comprenant un modèle d'une unité d'amortissement idéale, et adaptée de façon à calculer à quelle pression P' une unité d'amortissement idéale se trouve dans une situation donnée à l'aide dudit modèle pour lequel le signal d'angle $\alpha_{sig}$ est utilisé comme signal d'entrée ; et à comparer la pression P à cet instant à la pression calculée P', et à déterminer une différence de pression $\Delta P = P' - P$, et à générer un signal d'indication si $\Delta P > P_{th1}$, $P_{th1}$ étant une valeur de seuil prédéterminée et réglable.

**2.** Système selon la revendication 1, dans lequel l'unité de calcul est adaptée de façon à totaliser un nombre n de $\Delta P$ déterminés durant une période de temps $t_1$, et à former $\sum \Delta P$, et, si $\sum \Delta P > P_{th2}$, $P_{th2}$ étant un niveau de seuil prédéterminé et réglable, l'unité de calcul est adaptée de façon à générer un signal d'indication.

**3.** Système selon la revendication 2, dans lequel l'unité de calcul est adaptée de façon à estimer la fiabilité de données recueillies et calculées durant la période de temps $t_1$ en fonction de critères tels qu'une plage d'angles d'articulation et/ou un taux d'angle articulé moyen et/ou un nombre de $\Delta P$ détectés qui dépassent $P_{th2}$, et à un générer un signal d'approbation si les critères sont satisfaits.

**4.** Système selon la revendication 3, qui est adapté de façon à envoyer un signal de commande à une unité de commande prévue dans le véhicule de façon à limiter le véhicule, par exemple par limitation de sa vitesse admissible et/ou de son couple moteur, s'il est généré un signal d'indication pour stipuler que le niveau d'huile dans l'unité d'amortissement (2, 3) à cet instant est trop bas et qu'un signal d'approbation est généré.

**5.** Système selon la revendication 1 ou 2, qui est adapté pour envoyer un signal de commande à une unité de commande prévue dans le véhicule de façon à limiter le véhicule, par exemple par limitation de sa vitesse admissible et/ou de son couple moteur, s'il est généré un signal d'indication pour stipuler que le niveau d'huile dans l'unité d'amortissement à cet instant est trop bas.

**6.** Système selon l'une quelconque des revendications précédentes, ce système comprenant une unité d'indication adaptée de façon à acheminer lesdits signaux d'indication vers le conducteur du véhicule.

**7.** Système selon l'une quelconque des revendications précédentes, dans lequel le modèle d'une unité d'amortissement idéale est :

$$P' = K \cdot \frac{x_n - x_{n-1}}{l - x_{n-1}},$$

où K est une constante, $x_n$ est l'infléchissement du piston de l'unité d'amortissement à l'instant n, $x_{n-1}$ est l'infléchissement du piston à l'instant n-1, et 1 est la longueur de l'unité d'amortissement.

**8.** Système selon l'une quelconque des revendications précédentes, qui est adapté de façon à surveiller le niveau d'huile dans plusieurs unités d'amortissement (2, 3), de telle sorte que le système comporte plusieurs capteurs de pression adaptés de façon à détecter des pressions P à l'instant donné dans lesdites unités d'amortissement (2, 3), l'unité de calcul étant adaptée de façon à calculer si l'une quelconque des ces pressions est trop basse, auquel cas elle génère un signal indiquant laquelle des unités d'amortissement est à une pression trop basse.

**9.** Système selon la revendication 8, qui est adapté de façon à envoyer des signaux de commande à une ou à plusieurs unités de commande qui régulent la pression dans les unités d'amortissement (2, 3) lorsqu'une pression P à l'instant donné dans une unité d'amortissement (2, 3) est trop basse, de façon telle que ladite ou lesdites unités de commande peuvent compenser cette basse pression en modifiant la pression dans une autre unité d'amortissement.

**10.** Procédé pour surveiller le niveau d'huile dans une unité d'amortissement qui fait partie d'une articulation d'un véhicule articulé, cette articulation reliant une section avant du véhicule à une section arrière, **caractérisé en ce que** le procédé comprend :

    - la détection de l'angle d'articulation $\alpha$ du véhicule à l'instant donné et la génération d'un signal d'angle d'articulation $\alpha_{sig}$ qui dépend de l'angle $\alpha$ détecté ;
    - l'envoi du signal d'angle $\alpha_{sig}$ à une unité de calcul comportant un modèle d'une unité d'amortissement idéale ;
    - le calcul de la pression P' à laquelle une unité d'amortissement idéale se trouve dans une situation donnée à l'aide dudit modèle pour lequel le signal d'angle $\alpha_{sig}$ est utilisé comme signal d'entrée ;
    - la détection d'une pression P audit instant dans l'unité d'amortissement (2, 3) et la génération d'un signal de pression qui dépend de cette pression P ;
    - l'envoi du signal de pression respectif à ladite unité de calcul ;
    - la comparaison de la pression P audit instant à la pression calculée P', et la détermination d'une différence de pression $\Delta P = P' - P$, et si $\Delta P > P_{th1}$, $P_{th1}$ étant une valeur de seuil prédéterminée et réglable, la génération d'un signal d'indication.

**11.** Procédé selon la revendication 10, qui comprend la totalisation d'un nombre n de $\Delta P$ déterminés durant une période de temps $t_1$, et la formation de $\sum \Delta P$, et, si $\sum \Delta P > P_{th2}$, $P_{th2}$ étant un niveau de seuil prédéterminé et réglable, la génération d'un signal d'indication.

**12.** Procédé selon la revendication 11, qui comprend l'estimation de la fiabilité de données recueillies et calculées durant la période de temps $t_1$, en fonction de critères tels qu'une plage d'angles d'articulation et/ou un taux d'angle articulé moyen et/ou un nombre de $\Delta P$ détectés qui dépassent $P_{th2}$, et la génération d'un signal d'approbation si les critères sont satisfaits.

**13.** Procédé selon la revendication 10 ou 11, qui comprend la limitation de la vitesse admissible et/ou du couple moteur du véhicule s'il est généré un signal d'indication pour stipuler que le niveau d'huile dans l'unité d'amortissement à cet instant est trop bas et qu'un signal d'approbation est généré.

**14.** Procédé selon la revendication 10 ou 11, qui comprend l'envoi d'un signal de commande à une unité de commande dans le véhicule de façon à limiter le véhicule, par exemple par limitation de sa vitesse admissible et/ou de son couple moteur, s'il est généré un signal d'indication pour stipuler que le niveau d'huile dans l'unité d'amortissement à cet instant est trop bas.

**15.** Procédé selon l'une quelconque des revendications 10 à 14, dans lequel le modèle d'une unité d'amortissement idéale est :

$$P' = K \cdot \frac{x_n - x_{n-1}}{l - x_{n-1}},$$

où K est une constante, $x_n$ est l'infléchissement du piston de l'unité d'amortissement à l'instant n, $x_{n-1}$ est l'infléchissement du piston à l'instant n-1, et 1 est la longueur de l'unité d'amortissement (2, 3).

**16.** Procédé selon l'une quelconque des revendications 10 à 15, qui comprend la surveillance du niveau d'huile dans plusieurs unités d'amortissement (2, 3), de façon telle que le procédé comprend la détection de pressions P à l'instant donné dans lesdites unités d'amortissement (2, 3), et le calcul pour savoir si l'une quelconque de ces pressions est trop basse, ce qui indique un niveau d'huile trop bas, et la génération d'un signal indiquant laquelle des unités d'amortissement (2, 3) est à une pression trop basse.

**17.** Procédé selon la revendication 16, qui comprend l'envoi de signaux de commande à une ou à plusieurs unités de commande qui régulent la pression dans les unités d'amortissement (2, 3) lorsqu'une pression P à cet instant dans une unité d'amortissement (2, 3) est trop basse, de telle sorte que ladite ou lesdites unités de commande peuvent compenser cette basse pression en modifiant la pression dans une autre unité d'amortissement (2,3).

**18.** Procédé selon l'une quelconque des revendications 10 à 17, qui comprend l'acheminement desdits signaux d'indication vers le conducteur du véhicule.

**19.** Produit de programme informatique, qui comprend des instructions de programme informatique permettant à un système informatique dans un véhicule d'exécuter les étapes selon le procédé selon l'une quelconque des revendications 10 à 18 lorsque les instructions de programme informatique sont exécutées sur ledit système informatique.

**20.** Produit de programme informatique selon la revendication 19, dans lequel les instructions de programme informatique sont mémorisées sur un support qui est lisible par un système informatique.

FIG. 1

FIG. 2

SYSTEM

| ANGLE SENSOR | $\alpha_{sig}$ | CALCULATION UNIT |
|---|---|---|

| 1: FIRST PRESSURE SENSOR | PRESSURE SIGNAL |
|---|---|

| PROCESS DEVICE | MODEL |
|---|---|

| n PRESSURE SENSORS | PRESSURE SIGNALS |
|---|---|

INDICATING SIGNAL

FIG. 3

```
                    ┌─────────────────┐
            ┌──────▶│     DETECT      │◀──────┐          (A)
            │       │   ARTICULATION  │       │
            │       │     ANGLE α     │       │
            │       └─────────────────┘       │
            │                │                │
            │                ▼                │
            │       ┌─────────────────┐       │
            │       │ SEND ARTICULATION│      │          (B)
            │       │  ANGLE SIGNAL TO │      │
            │       │ CALCULATION UNIT │      │
            │       └─────────────────┘       │
            │                │                │
            │                ▼                │
            │       ┌─────────────────┐       │
            │       │    CALCULATE    │       │          (C)
            │       │   PRESSURE P´   │       │
            │       └─────────────────┘       │
            │                │                │
            │                ▼                │
            │       ┌─────────────────┐       │
            │       │  DETECT PRESSURE │      │          (D)
            │       │        P         │      │
            │       └─────────────────┘       │
            │                │                │
            │                ▼                │
            │       ┌─────────────────┐       │
            │       │  SEND PRESSURE  │       │          (E)
            │       │   SIGNAL TO     │       │
            │       │ CALCULATION UNIT │      │
            │       └─────────────────┘       │
            │                │                │
            │                ▼                │
            │       ┌─────────────────┐       │
            │       │    DETERMINE    │       │
            │       │   ΔP = P´ - P   │       │
            │       └─────────────────┘       │
            │                │                │
            │                ▼                │
            │  NO         ◇─────◇             │          (F)
            └──────────── ΔP > Pth1? ─────────┤
                         ◇─────◇             │
                            │                │
                         YES │                │
                            ▼                │
                   ┌─────────────────┐       │
                   │    GENERATE     │───────┘
                   │   INDICATING    │
                   │     SIGNAL      │
                   └─────────────────┘
```

DETECT ARTICULATION ANGLE α (A)

SEND ARTICULATION ANGLE SIGNAL TO CALCULATION UNIT (B)

CALCULATE PRESSURE P´ (C)

DETECT PRESSURE P (D)

SEND PRESSURE SIGNAL TO CALCULATION UNIT (E)

DETERMINE $\Delta P = P´ - P$

$\Delta P > P_{th1}$?

NO

YES

GENERATE INDICATING SIGNAL

(F)

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008073045 A
- US 4583756 A

- DE 3405871